Europäisches Patentamt

European Patent Office

Office européen des brevets

(19)

(11) Veröffentlichungsnummer: **0 263 912**

**A1**

(12) # EUROPÄISCHE PATENTANMELDUNG

(21) Anmeldenummer: **87103228.0**

(22) Anmeldetag: **06.03.87**

(51) Int. Cl.⁴: **G05D 3/10** , G05B 19/40

---

Die Bezeichnung der Erfindung wurde geändert (Richtlinien für die Prüfung im EPA, A-III, 7.3).

(30) Priorität: **22.07.86 CH 2949/86**

(43) Veröffentlichungstag der Anmeldung: **20.04.88 Patentblatt 88/16**

(84) Benannte Vertragsstaaten: **CH DE FR LI SE**

(71) Anmelder: **LGZ LANDIS & GYR ZUG AG**

**CH-6301 Zug(CH)**

(72) Erfinder: **Serwart, Georg**
**Aentlerweg 12**
**CH-8932 Mettmenstetten(CH)**
Erfinder: **Tobler, Heinz**
**Sagenbachmatt 7**
**CH-6280 Hochdorf(CH)**
Erfinder: **Jost, Fritz**
**Schachenmatten 21**
**CH-8906 Bonstetten(CH)**

---

(54) **Positionsregelung mit Pseudo-Stellungsrückmeldung.**

(57) Die Regelungsvorrichtung (1) mit einem Regler (5) zur Beeinflussung der Stellung von mindestens einem durch einen Antrieb (8) verstellbaren Stellorgan mittels Stellbefehlen und Mitteln zur Rückmeldung der Stellung von Stellorganen an den Regler enthält einen integrierenden Speicher (13), der die Stellbefehle an einen elektromotorischen Antrieb (8) solcher Bauart, bei dem eine lineare Proportionalität zwischen Stellbefehl und Verstellweg besteht, summiert und die Summe der Stellbefehle als Stellungssignal speichert. Sie enthält weiterhin mindestens einen Impulsgeber (15, 17, 25) und im Falle des Vorhandenseins mehrerer Impulsgeber (15, 17, 25) ausserdem Verknüpfungsglieder (16, 24), durch den bzw. die das Stellorgan periodisch in eine der Endstellungen gesteuert wird.

EP 0 263 912 A1

## Regelungsvorrichtung

Die Erfindung bezieht sich auf eine Regelungsvorrichtung nach dem Oberbegriff des Anspruchs 1.

Aus der DE-OS 30 36 661 ist eine zentrale Warmwasserheizungsanlage bekannt, bei der Ventile an den Wärmetauschern der zu beheizenden Räume von einem Raumtemperaturregler betätigt werden, die ihre Stellung an den Raumtemperaturregler zurückmelden. Trotz der unbestreitbaren Vorzüge einer Vorrichtung, bei der die Stellung der Stellorgane an den Regler zurückgemeldet wird, wird eine solche Lösung in der Praxis der Heizungsanlagentechnik nur wenig angewendet, weil der damit verbundene Aufwand, wie beispielsweise aus der CH-PS 582 386 ersichtlich, sehr gross ist, denn es bedarf dazu nicht nur einer geeigneten Einrichtung am Stellorgan selbst, sondern auch einer Rückmeldeleitung zum Regler. Dies gilt in besonderem Masse für Heizkörperventile in Wohnräumen, vor allem dann, wenn bei einer Modernisierung bestehender Altanlagen eine moderne Heizungsregelung nachgerüstet werden soll.

Der Erfindung liegt die Aufgabe zugrunde, eine Regelungsvorrichtung der eingangs genannten Art zu schaffen, bei der am Stellglied selbst keine Vorrichtung zur Stellungsrückmeldung vorhanden und eine Rückmeldeleitung vom Stellglied zum Regler nicht erforderlich ist.

Die Lösung dieser Aufgabe gelingt mit den im kennzeichnenden Teil des Anspruchs 1 genannten Mitteln. Zweckmässige Ausgestaltungen der Erfindung sind in den weiteren Ansprüchen gekennzeichnet.

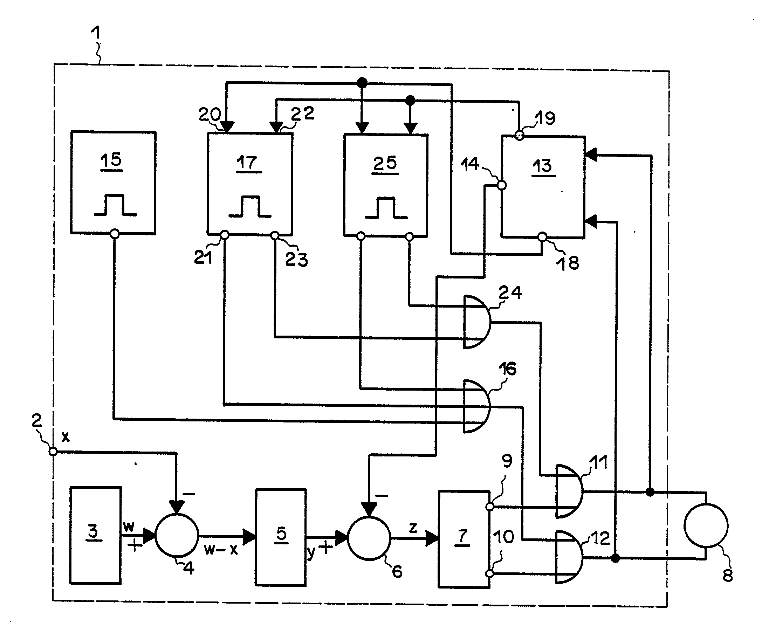

Ein Ausführungsbeispiel der Erfindung wird nachfolgend anhand der Zeichnung beschrieben.

Dargestellt ist ein Regelgerät 1 mit einem Eingang 2 für eine Regelgrösse x, die im Falle einer Heizungsregelung eine Temperaturgrösse ist. Das Regelgerät 1 enthält einen Sollwerteinsteller 3, der eine Führungsgrösse w abgibt. Regelgrösse x und Führungsgrösse w werden in bekannter Weise mittels eines ersten Komparators 4 verknüpft und das Differenzsignal w-x einem Regler 5 mit P-oder PI-Regelverhalten zugeführt, der aus dem Differenzsignal w-x eine Stellgrösse y bildet. Die Stellgrösse y gelangt über einen in seiner Funktion noch zu beschreibenden zweiten Komparator 6 zu einem Dreipunktregler 7, der aus einem mit der Stellgrösse y zusammenhängenden Eingangssignal z Stellbefehle für einen motorischen Antrieb 8 bildet. Die Zeitdauer der Stellbefehle ist dabei dem Eingangssignal z proportional.

Der Dreipunktregler 7 weist zwei Ausgänge auf: einen ersten Ausgang 9, an dem ein Stellbefehl dann erscheint, wenn der Antrieb 8 in Oeffnungsrichtung betätigt werden soll, und einen zweiten Ausgang 10, an dem ein Stellbefehl dann erscheint, wenn der Antrieb 8 in Schliessrichtung betätigt werden soll. Diese beiden Ausgänge sind unter Zwischenschaltung zweier ODER-Verknüpfungsglieder 11 und 12, deren jedes zwei Eingänge und einen Ausgang besitzt und deren Funktion später beschrieben wird, mit nach Drehrichtung unterschiedenen Eingängen des elektromotorischen Antriebs 8 verbunden. Das erste ODER-Verknüpfungsglied 11 befindet sich in jener Verbindung, die den Antrieb 8 in Oeffnungsrichtung laufen lässt, das zweite ODER-Vernüpfungsglied 12 befindet sich in jener Verbindung, die den Antrieb 8 in Schliessrichtung laufen lässt.

Die Stellbefehle vom Dreipunktregler 7 zum Antrieb 8 gelangen ausserdem zu einem integrierenden Speicher 13, in dem die Stellbefehle aufsummiert und in einen Speicherwert umgeformt werden. Die Signale werden dabei nicht unmittelbar an den Ausgängen 9 und 10 des Dreipunktreglers 7 abgenommen, sondern an den Ausgängen der ODER-Vernüpfungsglieder 11 und 12.

Befehle in Oeffnungsrichtung erhöhen den Speicherwert, Befehle in Schliessrichtung erniedrigen den Speicherwert. Die Zeitdauer, die nötig ist, um den Antrieb 8 von der einen Endstellung des Stellorgans in die andere Endstellung laufen zu lassen, entspricht der Differenz zwischen dem minimalen und dem maximalen Speicherwert. Es ist zweckmässig, der Endstellung "Geschlossen" den Speicherwert Null, der Endstellung "Voll offen" den Speicherwert Maximum zuzuordnen. Der jeweilige Inhalt des Speichers 13 entspricht somit der Stellung des Stellorgans.

Vorteilhaft ist es, wenn die Stellbefehle zeitdiskrete Werte haben. Beträgt beispielsweise die Laufzeit des Antriebs von der einen Endstellung in die andere 120 Sekunden, so können die Stellbefehle Vielfach von 0,5 Sekunden sein, so dass die Zahl der Schritte 240 beträgt. Zweckmässig ist es dann, den integrierenden Speicher 13 so auszulegen, dass der Endstellung "Geschlossen" ein Zählerstand Null und der Endstellung "Voll offen" ein Zählerstand 240 entspricht. Die Wahl der Schrittgrösse und damit der Auflösung kann in weiten Grenzen variiert werden.

Als motorischer Antrieb 8 kann auch ein Schrittmotor verwendet werden. In diesem Fall ist der Dreipunktregler 7 so ausgelgt, dass er jeweils eine dem Eingangssignal z proportionale Anzahl von Impulsen abgibt. Die Zahl der Impulse, die nötig ist, um das Stellorgan von der Stellung "Geschlossen" in die Stellung" Voll offen" zu bringen, ergibt dann den maximalen Zählerstand im Speicher 13.

Ein erster Ausgang 14 des Speichers 13 ist mit einem invertierenden Eingang des Komparators 6 verbunden. Der Inhalt des Speichers 13 wird somit mit der Stellgrösse y verglichen. Das mit der Stellgrösse y zusammenhängende Eingangssignal z des Dreipunktreglers 7 ist also die Differnez zwischen Stellgrösse y und erreichter Stellung des Stellorgans. Der Antrieb 8 wird so lange in die entsprechende Richtung gesteuert, bis der Inhalt des Speichers 13 mit der Stellgrösse y übereinstimmt. Das Eingangssignal z am Dreipunktregler 7 ist dann Null und an den beiden Ausgängen des Dreipunktreglers treten keine Signale auf, so dass der Antrieb 8 keine weiteren Stellbefehle erhält, also abgeschaltet ist.

Durch das Zusammenwirken von Dreipunktregler 7, Speicher 13 und Komparator 6 wird damit erreicht, dass hinsichtlich der Stellung des Antriebs 8 eine Regelung gewährleistet ist, ohne dass eine Rückmeldung der Stellung des Antriebs 8 erforderlich ist.

Die bis hierher beschriebene Vorrichtung löst die gestellte Aufgabe. Die im Zusammenhang mit weiteren vorteilhaften Ausgestaltungen der Erfindung bereits beschriebenen ODER-Verknüpfungsglieder 11 und 12 sind dafür entbehrlich, so dass die Ausgänge 9 und 10 des Dreipunktreglers 7 direkt mit den Eingängen des Antriebs 8 und des Speichers 13 verbunden werden können.

Nachfolgend werden nun solche vorteilhaften weiteren Ausgestaltungen beschrieben, zu deren Verwirklichung die erwähnten ODER-Verknüpfungsglieder 11 und 12 erforderlich sind.

Bei Inbetriebnahme des Regelgerätes 1 wie auch nach einem Stromausfall ist eine Uebereinstimmung zwischen der Stellung des Antriebs 8 und dem Inhalt des Speichers 13 zunächst nicht vorhanden. Es ist deshalb zweckmässig, im Regelgerät 1 soche Mittel vorzusehen, die nach der Inbetriebnahme oder nach einem Stromausfall automatisch diese Uebereinstimmung herstellen.

Dazu dient ein erster Impulsgeber 15. Nach jedem Stromunterbruch, sei es beim erstmaligen Einschalten, nach einem Stromausfall oder nach der Ausführung von Wartungs-oder Einstellarbeiten, erzeugt dieser Impulsgeber 15 ein Signal von einer Dauer, die grösser ist als die Laufzeit des Antriebs 8 von der einen Endstellung in die andere Endstellung. Dieses Signal gelangt über ein drittes ODER-Verknüpfungsglied 16 an den zweiten Eingang des zweiten ODER-Verknüpfungsgliedes 12 und steuert den Antrieb 8 damit in die Stellung "Geschlossen". Gleichzeitig wird der Speicher 13 auf Null gestellt.

Wenn der vom Impulsgeber 15 abgegebene Impuls noch andauert, nachdem der Antrieb 8 die Endstellung "Geschlossen" und der Speicher 13 den Inhalt Null erreicht hat, so bleibt das ohne weitere Wirkung. Auf jeden Fall ist damit sichergestellt, dass eine Uebereinstimmung zwischen der Stellung des Antriebs 8 und dem Inhalt des Speichers 13 besteht, ganz gleich ob eine solche Uebereinstimmung zuvor bestanden hat oder nicht.

Es ist in der Regel vorgesehen, dass die Stellorgane auch von Hand betätigt werden können, um beispielsweise im Falle einer Störung eingreifen zu können. Wird aber das Stellorgan von Hand betätigt, so ändert sich nur dessen Stellung, nicht aber gleichzeitig der Inhalt des Speichers 13. Folglich besteht die Uebereinstimmung zwischen der Stellung des Antriebs 8 und dem Inhalt des Speichers 13 nicht mehr. Es ist deshalb vorteilhaft, Mittel vorzusehen, die diese Uebereinstimmung wieder herbeiführen. Ein besonders zweckmässiger Zeitpunkt, diese Uebereinstimmung zwangsweise herbeizuführen, ist, wenn der Inhalt des Speichers 13 einer der beiden Endstellungen des Antriebs 8 entspricht, also entweder den Inhalt Null oder den Inhalt Maximalwert hat.

Dazu dient ein vom Speicher 13 angesteuerter zweiter Impulsgeber 17. Der Speicher 13 besitzt deshalb zwei weitere Ausgänge: einen zweiten Ausgang 18, an dem dann ein impulsförmiges Signal erscheint, wenn der Inhalt des Speichers 13 den Wert Null erreicht, und einen dritten Ausgang 19, an dem ein ebenfalls impulsförmiges Signal dann erscheint, wenn der Inhalt des Speichers 13 seinen Maximalwert erreicht.

Der Ausgang 18 des Speichers 13 ist mit einem ersten Eingang 20 des Impulsgebers 17 verbunden. Sobald am Eingang 20 ein Impulssignal erscheint, löst der Impulsgeber 17 seinerseits einen Impuls aus, der an einem ersten Ausgang 21 erscheint und über einen zweiten Eingang des ODER-Verknüpfungsgliedes 16, dessen Ausgang, einen zweiten Eingang des ODER-Verknüpfungsgliedes 12 und dessen Ausgang zum Antrieb 8 gelangt und diesen in Schliessrichtung laufen lässt. Dieser Impuls hat eine Länge, die grösser ist als die maximale Laufzeit des Antriebs 8 von der einen Endstellung in die zweite Endstellung. Damit wird in Analogie zur vorher beschriebenen Funktion des Impulsgebers 15 erreicht, dass nach Ablauf des Impulses eine Uebereinstimmung zwischen dem Inhalt des Speichers 13 und der Stellung des Antriebs 8 dann besteht, wenn der Inhalt des Speichers 13 Null ist.

Die gleiche Art der Synchronisierung von Speicherinhalt und Stellung des Antriebs 8 lässt sich auch dann erreichen, wenn der Speicher 13 als Inhalt den Maximalwert aufweist. Der Antrieb 8 müsste sich dann in der Endstellung "Voll geöffnet" befinden. Um die Uebereinstimmung zwischen Speicherinhalt und Stellung des Antriebs 8 auch in diesem Fall zwangsweise herbeizuführen, ist der dritte Ausgang 19 des Speicher 13 mit einem zweiten Eingang 22 des Impulsgebers 17 verbunden. Ein Signal am Eingang 22 löst ein an einem zweiten Ausgang 23 des Impulsgebers 17 erscheinendes Signal aus, das über ein viertes ODER-Verknüpfungsglied 24 zum ODER-Verknüpfungsglied 11 gelangt und damit den Antrieb 8 in Oeffungsrichtung laufen lässt.

Auch dieses vom Impulsgeber 17 abgegebene Signal hat eine Zeitdauer, die grösser ist als die Laufzeit des Antriebs 8 von der einen Endstellung in die zweite Endstellung. In Analogie zur zuvor beschriebenen Synchronisation beim Zustand "Geschlossen" wird somit eine Synchronisation für den Zustand "Voll geöffnet" erreicht. Der Impulsgeber 17 erzwingt also, dass jeweils dann, wenn der Speicher 13 einen seiner Grenzwerte erreicht, der Antrieb 8 in die zugehörige Endstellung gebracht wird. Abweichungen zwischen dem Inhalt des Speichers 13 und der Stellung des Antriebs 8 werden somit automatisch korrigiert.

Es ist denkbar, dass in einem Zustand, bei dem in einer Endstellung eine Uebereinstimmung zwischen Stellung des Antriebs 8 und Inhalt des Speichers 13 besteht, eine Handverstellung am Antrieb 8 vorgenommen wird. Besteht in einem solchen Fall auch eine Uebereinstimmung zwischen der Stellgrösse y und dem Inhalt des Speichers 13, so kann die durch die Handverstellung hervorgerufene Abweichung nicht automatisch korrigiert werden. Es ist deshalb zweckmässig, eine zusätzliche Synchronisation zeitgesteuert ablaufen zu lassen. Dazu dient ein dritter Impulsgeber 25, der mit seinen Ein-und Ausgängen 25 dem Impulsgeber 17 parallel geschaltet ist. Dieser Impulsgeber 25 enthält einen Zeitgeber, der einen Ausgangsimpuls in der zuvor beschriebenen Weise auslöst, und zwar eine Synchronisation für den Zustand "Voll geöffnet", wenn der Speicher 13 den Maximalwert aufweist, und eine Synchronisation für den Zustand "Geschlossen", wenn der Speicher 13 den Wert Null aufweist.

Die mit ihren Ein-und Ausgängen parallel geschalteten Impulsgeber 17 und 25 unterscheiden sich einmal darin, dass der Impulsgeber 25 einen Zeitgeber enthält, den der Impulsgeber 17 nicht aufweist, zum anderen dadurch, dass der Impulsgeber 17 immer dann wirksam wird, wenn der Speicher 13 einen der Grenzwerte erreicht, während der Impulsgeber 25 dann wirksam wird, wenn bei Ablauf der Zeit des Zeitgebers der Speicher 13 bereits einen seiner Grenzwerte aufweist.

Damit wird erreicht, dass der Impulsgeber 17 eine Synchronisation grundsätzlich immer dann veranlasst, wenn der Speicher 13 einen seiner Grenzwerte erreicht, dass hingegen der Impulsgeber 25 eine Synchronisation nur bei Ablauf einer vorgegebenen Zeitspanne auslöst, wenn bei Ablauf dieser Zeitspanne der Speicher 13 bereits einen seiner Grenzwerte aufweist.

Im beschriebenen Ausführungsbeispiel wurde davon ausgegangen, dass von einer Regelvorrichtung 1 jeweis nur ein einziger Antrieb 8 eines Stellgliedes betätigt wird. Es ist jedoch auch möglich, mehrere Antriebe 8 parallel zu schalten. Eine solche Lösung bietet sich beispielsweise bei grösseren Wohnräumen mit mehreren Wärmetauschern an.

Je nach Gegebenheiten der zu regelnden Anlage kann es aber auch zweckmässig sein, dass eine periodische Synchronisation grundsätzlich immer in die gleiche Endstellung erfolgt. Um im Falle einer Heizungssteuerung nicht nutzlos Energie zu verschwenden, kann es angezeigt sein, diese Synchronisation immer nur in die Endstellung "Geschlossen" vorzunehmen. Es kann sich andererseits aber als zweckmässig erweisen, als Synchronisationsstellung immer diejenige Stellung vorzusehen, die der jeweils aktuellen Stellung am nächsten liegt, weil damit die durch die Synchronisation kurzfristig verursachte Störung der Regelparameter am kleinsten gehalten werden kann.

Mit der beschriebenen Vorrichtung ist es möglich, die Stellung des Stellorgans an die Regelvorrichtung zurückzumelden, ohne dass am Stellorgan selbst eine Vorrichtung zur Stellungsrückmeldung vorhanden und eine Rückmeldung vom Stellorgan zum Regler erforderlich ist. Damit bietet sich die die vorteilhafte Möglichkeit, unsinnige Stellbefehle, beispielsweise der nachfolgend beschriebenen Art, zu vermeiden. Wenn in einer Heizungsanlage mit Einzelraumregelung der Temperatur der Temperaturfühler eines Raumes ein Unterschreiten des Sollwertes der Raumtemperatur feststellt, so ist die normale Folge, dass der Regler das Stellorgan am Wärmetauscher dieses Raumes dazu veranlasst, weiter zu öffnen. Dieser Befehl ist aber dann unsinnig, wenn das entsprechende Stellorgan bereits voll geöffnet ist. Kann der Regler erkennen, dass das Stellorgan bereits voll geöffnet ist, kann er einen zweckmässigeren Befehl erteilen, beispielsweise den, die Vorlauftemperatur in der Heizungsanlage zu erhöhen, was in der Folge dazu führt, dass in allen anderen Räumen, in denen keine Sollwertunterschreitung festgestellt wurde, die Stellorgane um einen bestimmten Betrag in Schliessrichtung verstellt werden. Ein entsprechend ausgestalteter übergeordneter Regler könnte das veranlassen, ohne dass es zuerst zu einem Ansprechenden der Temperaturfühler auf eine Sollwertüberschreitung in diesen Räumen kommt, was wegen der solchen Heizungssystemen innewohnenden Trägheit aufgrund der Zeitkonstanten einen unnötigen Energieverbrauch nach sich ziehen würde.

Die Erfindung kann mit grossem Vorteil bei Heizungsanlagen angewendet werden, jedoch vorteilhaft auch bei Lüftungs-und Klimaanlagen sowie Anlagen beliebiger Art, wenn die Rückmeldung der Stellung von Stellorganen zweckmässig, aber nur mit grossem Aufwand realisierbar wäre.

## Ansprüche

1. Regelungsvorrichtung mit einem Regler zur Beeinflussung der Stellung von mindestens einem durch einen Antrieb verstellbaren Stellorgan mittels Stellbefehlen und Mitteln zur Rückmeldung der Stellung von Stellorganen an den Regler, dadurch gekennzeichnet, dass der Antrieb (8) elektromotorisch einer solchen Bauart ist, bei dem eine lineare Proportionalität zwischen Stellbefehl und Verstellweg besteht, und dass der Regler (1) einen integrierenden Speicher (13) enthält, der die Stellbefehle summiert und die Summe der Stellbefehle als Stellungssignal speichert.

2. Regelungsvorrichtung nach Anspruch 1, dadurch gekennzeichnet, dass der Motor ein Synchronmotor ist und dass die Summe der Laufzeiten in Oeffnungs-und in Schliessrichtung das Stellungssignal bildet.

3. Regelungsvorrichtung nach Anspruch 1, dadurch gekennzeichnet, dass der Motor ein Schrittmotor ist und dass die Summe der in Oeffungs-und Schliessrichtung abgegebenen Impulszahlen das Stellungssignal bildet.

4. Regelungsvorrichtung nach einem der vorhergehenden Ansprüche, dadurch gekennzeichnet, dass mindestens ein Impulsgeber (15, 17, 25) vorhanden ist und dass im Falle des Vorhandenseins mehrerer Impulsgeber (15, 17, 25) Verknüpfungsglieder (16, 24) vorhanden sind, durch den bzw. die das Stellorgan periodisch in eine der Enstellungen gesteuert wird.

5. Regelungsvorrichtung nach Anspruch 4, dadurch gekennzeichnet, dass ein erster Impulsgeber (15) vorhanden ist, durch den das Stellorgan nach jedem Stromunterbruch in eine der Endstellungen gesteuert wird.

6. Regelungsvorrichtung nach Anspruch 4, dadurch gekennzeichnet, dass ein zweiter Impulsgeber (17) vorhanden ist, durch den das Stellorgan immer dann in eine der Endstellungen gesteuert wird, wenn der Inhalt des Speichers (13) einen der Grenzwerte erreicht.

7. Regelungsvorrichtung nach Anspruch 4, dadurch gekennzeichnet, dass ein einen Zeitgeber enthaltender dritter Impulsgeber (25) vorhanden ist, durch den das Stellorgan immer dann in eine der Endstellungen gesteuert wird, wenn der Inhalt des Speichers (13) einen der Grenzwerte aufweist und der Zeitgeber abgelaufen ist.

8. Regelungsvorrichtung nach einem der Ansprüche 4 bis 7, dadurch gekennzeichnet, dass die Impulsgeber (15, 17, 25) und Verknüpfungsglieder (16, 24) so ausgebildet sind, dass immer die gleiche Endstellung angesteuert wird.

9. Regelungsvorrichtung nach Anspruch 8, dadurch gekennzeichnet, dass die gleiche Endstellung immer die "ZU"-Stellung ist.

10. Regelungsvorrichtung nach einem der Ansprüche 4 bis 7, dadurch gekennzeichnet, dass die Impulsgeber (15, 17, 25) und Verknüpfungsglieder (16, 24) so ausgebildet sind, dass immer jene Endstellung angesteuert wird, die der augenblicklichen Stellung am nächsten liegt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 000 735 (SIEMENS)<br>* Zusammenfassung; Seite 3, Zeile 33 - Seite 4, Zeile 6; Seite 4, Zeile 31 - Seite 6, Zeilen 4, 23-33; Ansprüche 1, 2, 5; Figuren 1, 2 *<br><br>--- | 1 | G 05 D 3/10<br>G 05 B 19/40 |
| X | US-A-3 719 878 (FERGUSON et al.)<br>* Spalte 1, Zeile 27 - Spalte 2, Zeile 3; Spalte 2, Zeile 39 - Spalte 4, zeile 25; Figur 1 * | 1,3 | |
| A | | 5,8,9 | |
| | --- | | |
| X | DE-A-2 946 328 (BERNEY)<br>* Seite 6, Zeilen 1-25; Seite 7, Zeile 8 - Seite 8, Zeile 12; Seite 8, Zeile 21 - Seite 12, Zeile 5; Ansprüche 1-4; Figur 1 * | 1,3 | RECHERCHIERTE SACHGEBIETE (Int. Cl.4)<br><br>G 05 D<br>G 05 B |
| A | | 5,8,9 | |
| | --- | | |
| X | DE-A-2 039 535 (KNAB ELEKTRONIK)<br>* Seite 1, Zeile 1 - Seite 2, Zeile 37; Seite 3, Zeilen 26-30; Seite 5, Zeile 11 - Seite 7, Zeile 15; Ansprüche 1, 4, 8-12; Figuren 1, 2 *<br><br>---     -/- | 1,3 | |

Der vorliegende Recherchenbericht wurde für alle Patentansprüche erstellt.

| Recherchenort | Abschlußdatum der Recherche | Prüfer |
|---|---|---|
| BERLIN | 23-10-1987 | BEITNER M.J.J.B. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 116 904 (BAYERISCHE MOTORENWERKE) <br> * ganzes Dokument * <br><br> --- | 5,6,10 | |
| A | GB-A-2 072 379 (HONEYWELL) <br><br> * Seite 1, Zeilen 5-93 * <br><br> ----- | 1,3,4, 8,9 | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 23-10-1987 | BEITNER M.J.J.B. |